Europäisches Patentamt

European Patent Office

Office européen des brevets

(19)

(11) Veröffentlichungsnummer : **0 537 205 B1**

(12)

# EUROPÄISCHE PATENTSCHRIFT

(45) Veröffentlichungstag der Patentschrift :
**31.08.94 Patentblatt 94/35**

(51) Int. Cl.$^5$ : **G06F 15/80,** G06F 7/52,
G06F 7/544

(21) Anmeldenummer : **91911443.9**

(22) Anmeldetag : **18.06.91**

(86) Internationale Anmeldenummer :
**PCT/DE91/00504**

(87) Internationale Veröffentlichungsnummer :
**WO 92/01266 23.01.92 Gazette 92/03**

(54) ANORDNUNG ZUR EMULATION NEURONALER NETZE UND VERFAHREN ZU IHREM BETRIEB.

(30) Priorität : **04.07.90 DE 4021228**

(43) Veröffentlichungstag der Anmeldung :
**21.04.93 Patentblatt 93/16**

(45) Bekanntmachung des Hinweises auf die
Patenterteilung :
**31.08.94 Patentblatt 94/35**

(84) Benannte Vertragsstaaten :
**DE FR GB**

(56) Entgegenhaltungen :
**EP-A- 370 543
US-A- 3 725 649**

(56) Entgegenhaltungen :
**US-A- 4 866 652
PROCEEDINGS OF THE IEEE 1990 COSTOM
INTEGRATED CIRCUITS CONFERENCE 13
May 1990, BOSTEN ,USA, pages 2631- 2634;
BROWN: 'A neutral network integrated circuit
supporting programmable exponent and mantissa'**

(73) Patentinhaber : **SIEMENS
AKTIENGESELLSCHAFT
Wittelsbacherplatz 2
D-80333 München (DE)**

(72) Erfinder : **PANDEL, Jürgen
Schlossweg 17a
D-8152 Feldkirchen-Westerham (DE)**

EP 0 537 205 B1

## Beschreibung

Die Erfindung bezieht sich auf eine Anordnung zur Emulation neuronaler Netze unter Verwendung von Multiplizierer, Addierer und eine Diskriminatorschaltung aufweisenden Neuroneinheiten.

Bei der Implementierung eines digitalen Hardware-Moduls für die Emulation künstlicher neuronaler Netze muß dem Datenformat für die Signale und Gewichte besondere Beachtung geschenkt werden. Ein Neuro-Emulator muß flexibel genug sein, damit Netze unterschiedlicher Struktur und Größe für die verschiedenen Anwendungsbereiche, wie z.B. Schwarz-Weiß-Bilderkennung, Grauwertbildverarbeitung, Spracherkennung oder Optimierungsaufgaben, untersucht werden können. Die verschiedenen Anwendungen bedingen aber unterschiedliches Datenformat, für SchwarzWeiß-Bilderkennung genügt z.B. eine 1-Bit-Zahlendarstellung für die Signale, während in den übrigen obengenannten Beispielen Signale analogen Ursprungs verarbeitet werden und deshalb eine feinere Stufung bei der Signaldarstellung erforderlich wird. Für die Gewichte sind in den meisten Fällen ebenfalls mehrere Bits für die Zahlendarstellung erforderlich. Ähnliche Verhältnisse liegen bei den verschiedenen Netztypen vor: Bei einem Hopfield-Netz, wie es z.B. in R.P.Lippmann "An introduction to computing with neural nets" IEEE ASSP Magazine, April 1987, Seite 4 bis 22 beschrieben ist, sind die Ausgangssignale der Neuronen mit 1 Bit codiert, während bei einem Mehrebenenperceptron, ebenfalls bei Lippman erläutert, mehrere Bits für die Codierung erforderlich sind. Voraussetzung für einen universell einsetzbaren Neuroemulator ist daher eine hinreichend große Wortlänge für Signale und Gewichte.

Ein Neuro-Emulator ist z.B. in EP 0 349 820 A1 erläutert. Der Neuro-Emulator für die programmierbare Emulation künstlicher neuronaler Netze mit digitaler Arbeitsweise weist pro Neuron eine Neuroneinheit auf, wobei alle Neuroneinheiten identischen Aufbau haben. Den Neuroneinheiten werden Eingangssignale zugeführt, die mit den Gewichten pro Neuroneinheit verknüpft werden. Die Eingangssignale können allen Neuroneinheiten oder nur einem Teil der Neuroneinheiten zugeführt werden; diese Eingangssignale werden pro Neuroneinheit mit den zugeordneten Gewichten verknüpft, anschließend wird pro Neuroneinheit die Summe der Produkte aus Eingangssignal und Gewicht gebildet und dieses Ergebnis in einer Diskriminatorschaltung untersucht. Die Vorgehensweise ist aus EP 0349820 A1 bekannt und wird im folgenden vorausgesetzt.

Für die Zahlendarstellung der Eingangssignale des Netzes und dessen Ausgangssignale genügt ein Festkommaformat. Der Grund hierfür liegt darin, daß die Eingangssignale in einer Vorverarbeitungsstufe stets in eine normierte Form gebracht werden können und die Ausgangssignale ohnehin durch die Diskriminatorfunktion des Neurons zahlenmäßig auf den Wertebereich -1,1 bzw. 0,1 beschränkt sind. Eine derartige Beschränkung gilt aber nicht für die Gewichte. Sie können Werte annehmen, die wesentlich größer als 1 sind, andererseits ist aber auch bei großen Netzen der Fall denkbar, daß sehr kleine Werte noch mit hoher Auflösung darstellbar sein müssen. Bei einer Zahlendarstellung im Festkomma-Zahlenformat müßte aus diesem Grund für die Gewichte eine erheblich größere Wortlänge vorgesehen werden als für die Eingangs- und Ausgangssignale. Hierdurch würde sich bei einer VLSI-Hardware-Realisierung einerseits die Fläche des Multipliziererfeldes in dem Neuroemulator nach EP 0 349 820 A1 vergrößern und andererseits würde sich das Pinzahlproblem noch weiter verschärfen.

Die der Erfindung zugrunde liegende Aufgabe besteht darin, eine Anordnung zur Emulation neuronaler Netze unter Verwendung von Multiplizierer, Addierer und eine Diskriminatorschaltung aufweisende Neuroneinheiten anzugeben, bei der der Aufwand für das Multipliziererfeld und die Addierer reduziert ist. Diese Aufgabe wird gemäß den Merkmalen des Patentanspruchs 1 gelöst.

Eine weitere Aufgabe der Erfindung ist es, ein besonders günstiges Verfahren zum Betrieb von Neuroneinheiten, die aus Multiplizierern, Addierern und Diskriminatorschaltungen bestehen, anzugeben, nach dem die Verknüpfung der Eingangssignale und der Gewichte erfolgt. Diese Aufgabe wird gemäß den Merkmalen des Patentanspruchs 7 gelöst.

Die Vorteile der Anordnung des Verfahrens liegen insbesondere darin, daß die Eingangssignale wie bisher im Festkommaformat zugeführt werden, die Gewichte jedoch im Gleitkommaformat. Dabei ist pro Neuroneinheit der Exponent der Gewichte immer gleich. Dies hat den Vorteil, daß als Multiplizierer Festkommamultiplizierer verwendet werden können, die jeweils die Eingangssignale mit den Mantissen der Gewichte multiplizieren. Zum Aufsummieren der Produkte können Festkommaddierer verwendet werden. Die Verknüpfung der Summe mit dem Exponenten der Gewichte pro Neuroneinheit erfolgt dann mit einem Gleitkomma-Multiplizierer, dessen Ausgangssignal der Diskriminatorschaltung zugeführt wird. Die Gleitkomma-Operationen werden somit auf die zeit- und flächenunkritische Diskriminatoreinheit beschränkt.

Weiterbildungen der Erfindung ergeben sich aus den Unteransprüchen. Gegenstand dieser Unteransprüche sind insbesondere zwei Ausführungsbeispiele für Gleitkomma-Multiplizierer, die so ausgeführt sind, daß die von den Gleitkomma-Multiplitierern abgegebenen Ergebnisse von beschränkter Bitzahl sind.

Anhand eines Ausführungsbeispieles, das in den Figuren dargestellt ist, wird die Erfindung weiter erläutert. Es zeigen

Figur 1    ein Blockschaltbild eines Neuroemulators, der im Prinzip aus EP 0 349 820 A1 bekannt ist,
Figur 2    eine Schaltung für die jeweiligen Neuroneinheiten,
Figur 3    eine erste Ausführung des Gleitkommamultiplizierers,
Figur 4    eine zweite Ausführung des Gleitkommamultiplizierers,
Figur 5    eine Teilschaltung aus der Neuroneinheit,
Figur 6    eine Darstellung der Wortlängen der Multiplizierer MZ und des Akkumulators AKK.

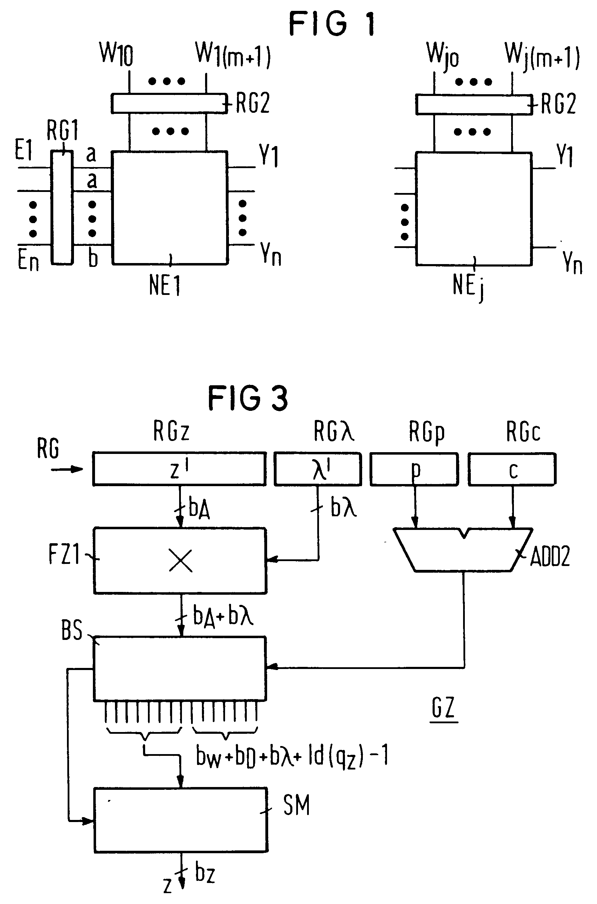

Nach Figur 1 besteht ein Neuroemulator aus Neuroneinheiten NE1 bis $NE_j$ (j=ganze Zahl), wobei jede Neuroneinheit NE gleich aufgebaut ist. Den Neuroneinheiten NE werden über ein Register RG1 Eingangssignale $E_1$ bis $E_n$ (n ganze Zahl) zugeführt, die mit Hilfe von Gewichten W gewichtet werden. Als Gewichte W werden den Neuroneinheiten NE Gewichte $W_o$ bis $W_{m+1}$ über ein Register RG2 zugeführt (m=ganze Zahl). Die Eingangssignale können den einzelnen Neuroneinheiten NE individuell (Signal b) zugeführt werden oder sie können mehreren Neuroneinheiten NE (Signal a) zugeleitet werden. Die Ausgangssignale der Neuroneinheiten NE werden mit y bezeichnet.

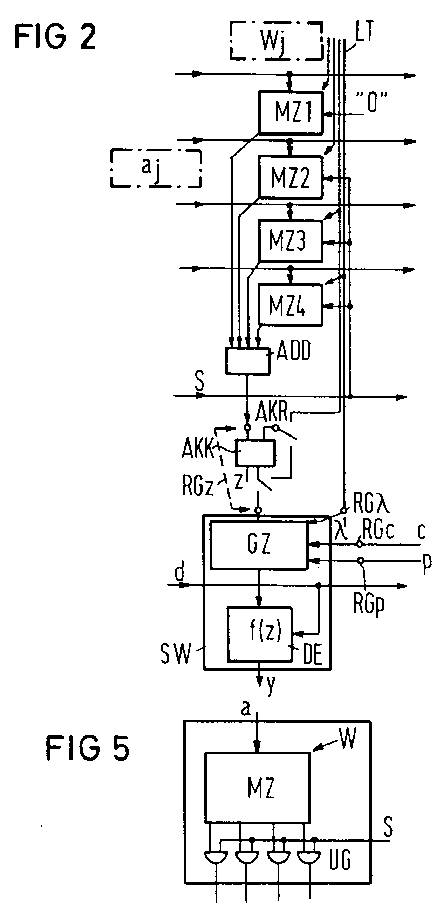

Im folgenden wird anhand der Figur 2, die die Realisierung einer einzigen Neuroneinheit NE zeigt, die Arbeitsweise der Anordnung dargestellt. Der Neuroneinheit NE nach Figur 2 werden Eingangssignale a und b zugeleitet und zusätzlich ein Schwellwert $\theta$ . Die Eingangssignale a werden mehreren Neuroneinheiten zugeleitet und werden als verzweigende Eingangssignale bezeichnet. Das Eingangssignal b ist ein individuelles Eingangssignal, das nur einer einzigen Neuroneinheit zugeführt wird. Das Ausgangssignal y der Neuroneinheit wird entsprechend der Formel 1 erzeugt:

$$y = f(z), \quad z = \lambda \left( \sum_{j=1}^{m} W_j a_j + wb + \theta \right) . \qquad (1)$$

Dabei sind $W_j$ (j=1 bis m) die Gewichtungen für die verzweigenden Eingänge, klein w das Gewicht für den individuellen Eingang b, $\lambda$ ein positiver Skalierungsfaktor, mit dem die Diskriminatorfunktion versteilert oder verflacht werden kann und f die nichtlineare Diskriminatorfunktion. Die Formel (1) kann vereinfacht werden, wenn das Gewicht für den individuellen Eingang b $w=W_o$ gewählt wird und für den Schwellwert $\theta =W_{M+1}$ gesetzt wird. Wird weiterhin angenommen, daß $a_0=b$ und $a_{m+1}=1$ wird, dann ergibt sich die Formel (2):

$$z = \lambda \sum_{j = 0}^{m + 1} W_j a_j . \qquad (2)$$

Zur Ausführung der Verknüpfung gemäß der Formel (2) sind somit Multiplizierer und Addierer erforderlich, zur Erzeugung des Ausgangsignales y zusätzlich eine Diskriminatorschaltung. Eine Schaltung, mit der diese Formel realisiert werden kann, zeigt Figur 2.

Die Neuroneinheit NE nach Figur 2 besteht aus Multiplizierern MZ, im Ausführungsbeispiel vier Multiplizierern MZ1 bis MZ4, aus Addierern ADD, AKK, einem Gleitkomma-Multiplizierer GZ und einer Diskriminatorschaltung DE. Die Diskriminatorschaltung DE kann in bekannter Weise aufgebaut sein, wie es z.B. aus der europäischen Patentanmeldung oder aus der Literaturstelle Lippmann bekannt ist. Sie wird mit dem Gleitkommamultiplizierer GZ zu einer Diskriminatoreinheit SW zusammengefaßt.

Durch die Multiplizierer MZ1 bis MZ4 werden die Eingangssignale a bzw. b mit den Gewichten zu Produkten verknüpft. Mit Hilfe des Addierers ADD wird dann diese Summe der Produkte gebildet. Mit Hilfe des Akkumulators AKK ist es möglich, das Ergebnis des Addierers ADD mit weiteren Werten zu summieren, die nacheinander dem Akkumulator AKK zugeführt werden. Das Ergebnis des Akkumulators AKK wird in dem Gleitkomma-Multiplizierer GZ einer Gleitkomma-Multiplikation unterworfen, die weiter unten beschrieben ist. Das Ergebnis des Gleitkomma-Multiplizierers GZ, das z genannt ist, wird anschließend der Diskriminatorschaltung DE zugeführt, die entsprechend der durch ein Steuersignal d einstellbaren Diskriminatorfunktion f (z) das Ausgangssignal y erzeugt.

Die Schaltung nach Figur 2 ist so ausgeführt, daß mit Hilfe eines Steuersignals S die Multiplizierer MZ1 bis MZ4 gesteuert werden können und zwar sind im Ausführungsbeispiel die Multiplizierer MZ2 bis MZ4 abschaltbar, während der Multiplizierer MZ1 immer eingeschaltet ist. Dadurch ist es möglich, daß in einem ersten Schritt das Produkt $W_0 . a_0$ gebildet wird. Gleichzeitig wird dem Akkumulator AKK über eine Leitung LT der Wert $\theta$ zugeführt. Das $\theta$ wird in ein Akkumulatoregister AKR geladen. In diesem Schritt sind die übrigen Multiplizierer MZ2 bis MZ4 durch das Steuersignal S gesperrt. Im darauf folgenden Schritt erfolgt die Addition von $\theta$ mit dem Produkt, das von MZ1 über den Addierer ADD zum Akkumulator AKK übertragen worden ist und gleichzeitig ändert sich das Steuersignal so, daß alle Multiplizierer MZ arbeitsfähig sind und in diesem Schritt die Verknüpfung der Eingangssignale a mit den über die Leitungen LT zugeführten Gewichten W durchführen.

Die Produkte von den Multiplizierern MZ1 bis MZ4 werden im Addierer ADD aufaddiert und die gebildete Summe dem Akkumulator AKK zugeführt und dort auf die im Akkumulatorregister AKK vorhandene Summe aufsummiert. Das Ausgangssignal des Akkumulators AKK soll $z'$ genannt werden, es wird dem Gleitkomma-Multiplizierer GZ zugeführt und dort mit dem Skalierungsfaktor $\lambda$ verknüpft. $\lambda$ ist vorher in ein Skalierungsregister RG$\lambda$ eingespeichert worden und kann von dort in den Gleitkomma-Multiplizierer GZ übernommen werden.

Für die Hardware-Realisierung der Neuroneinheiten spielen die erforderlichen Wortlängen eine Rolle, die von den Wortlängen der Gewichte und der Eingangssignale bzw. der Ausgangssignale abhängen. Dabei reicht es aus, sich auf Netze zu beschränken, bei denen die Eingangs- und Ausgangssignale nur positive Werte annehmen. Sollten negative Signale auftreten, dann können diese auf einfache Weise auf unipolare Signale umgesetzt werden, so daß eine Betrachtung von bipolaren Eingangssignalen nicht erforderlich ist. Im folgenden wird also vorausgesetzt; daß alle Eingangssignale $a_j$ und das Ausgangssignal y im Intervall 0,1 liegen und im Festkommaformat mit $b_D$ Bit codiert sind. Dementsprechend ist die Quantisierungsstufe dieser Signale gegeben durch

$$q_D = 2^{-b_D} \quad (3)$$

Es wird das Blockgleitkommaformat für die Gewichte W angewendet, also die Wortlängen der Mantisse mit $b_w$, die des Exponenten mit $b_c$ bezeichnet. Alle Gewichte W, die zu einer Neuroneinheit gehören, sind in einer gemeinsamen Gruppe zusammengefaßt und besitzen einen gemeinsamen Exponenten c. Die zugehörigen Mantissen werden mit $W_j'$, j=0 bis m+1 bezeichnet. Auch der Skalierungsfaktor $\lambda$ wird im Gleitkommaformat dargestellt, und zwar mit $\lambda'$ als Mantisse und p als Exponent. Somit gilt:

$$W_j = W_j' \, 2^c, \, j = 0,...,m + 1, \, \lambda = \lambda' \, 2^p \quad (4)$$

Wenn die Formel (4) in die Formel (2) eingesetzt wird, dann ergibt sich die Formel (5):

$$z = \lambda' \cdot 2^{c+p} \sum_{j=0}^{m+1} W_j' a_j . \qquad (5)$$

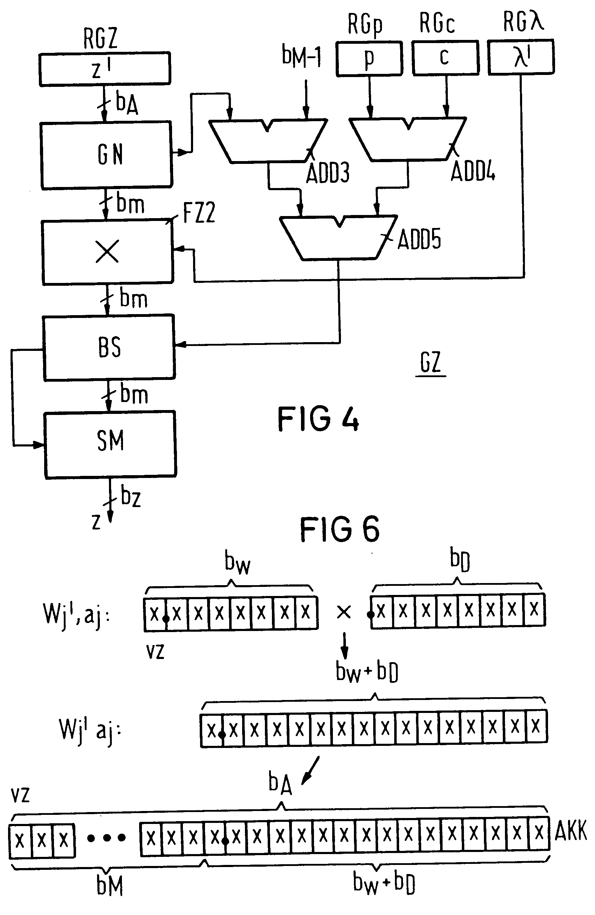

Aus (5) ist zu entnehmen, daß die Summe über die Produkte im Festkommaformat ausgeführt werden kann, nur die Multiplikation dieser Summe mit der positiven Gleitkommazahl $\lambda'\, 2^{c+p}$ muß in einem Gleitkommarechenwerk durchgeführt werden. Dieses Gleitkommarechenwerk ist der Gleitkommamultiplizierer GZ der Figur 2, der zu seiner Verknüpfung zusätzlich zu $\lambda'$, das im Skalierungsregister RG $\lambda$ steht, noch die Exponenten c und p benötigt, die in entsprechenden Registern RGc und RGp gespeichert sind. Gleitkommamultiplizierer, die dies durchführen können, ergeben sich aus den Figuren 3 und 4.

Da die Gewichte W sowohl positive als auch negative Werte annehmen können, muß für die Multiplikation $w_j' \, a_j$ ein Zweiquadrantenmultiplizierer vorgesehen werden. Die Ausgangswortlänge beträgt $b_D + b_w$ Bit. Im nachfolgenden Akkumulator AKK werden m+2 Summanden aufaddiert, daher muß der Akkumulator auf eine Wortlänge

$$b_A = b_D + b_W + b_M, \, b_M = -[-1d(m + 2)], \quad (6)$$

ausgelegt werden. Die eckigen Klammern der Formel (6) bezeichnen das Gauss-Symbol, d.h. in dem vorliegenden Fall ist $b_M$ die kleinste ganze Zahl, die gleich oder größer ist als 1d(m+2), 1d ist der Logarithmus zur Basis 2.

Das LSB des Produktes $W_j' a_j$ und damit auch das LSB der Summe über alle Produkte haben das Gewicht

$$q_A = 2^{-b_D - b_w + 1} \quad (7)$$

während die im Akkumulator betragsmäßig größte darstellbare Zahl gegeben ist durch $2^{b_M}$.

Die Verhältnisse sind in Figur 6 dargestellt. Durch die Multiplikation von $W_j' \, a_j$ mit der Bitlänge $b_w$, $b_D$ ergibt sich $W_j' \, a_j$ mit der Bitzahl $b_w + b_D$. Durch Aufsummierung wird im Akkumulator eine Summe gebildet mit einer Bitanzahl $b_M + b_W + b_D$. Das höchste Bit wird dabei als Vorzeichenbit VZ verwendet.

Bei der Hardware-Realisierung ist es wichtig, festzustellen, welchen Eingangswertebereich die Eingangssignale haben und welche Eingangswortlänge für die Erzeugung von f(z) erforderlich ist. f(z) ist bei neuronalen Netzen in der Regel eine monoton wachsende Funktion, denn schließlich soll einem höheren Anregungspotential des Neurons auch ein größeres Ausgangssignal entsprechen. Zunächst soll der Wertebereich von z bestimmt werden, für den noch keine Sättigung gegeben ist. Des weiteren muß die erforderliche Wortlänge für die Festkommazahlendarstellung von z bestimmt werden, denn es ist nicht erforderlich, alle Operationen in der Diskriminatorschaltung mit voller Wortlänge durchzuführen, wenn die Ausgangswortlänge von y z.B. nur 8 Bit ist.

Da f eine monoton wachsende Funktion ist, gilt

$$f_{min} = f(z_{min}), f_{max} = f(z_{max}), \quad (8)$$

wobei $z_{min}$ und $z_{max}$ der kleinste bzw. größte Wert von z ist. Ferner ist bei der Realisierung neuronaler Netze $f_{max}$ stets gleich eins und $f_{min}$ aufgrund der zuvor angestellten Betrachtungen stets gleich null. Wegen der Sättigungscharakteristik der Funktion wird $f_{max}$ bereits für $z = z_o < z_{max}$ und $f_{min}$ für $z = z_u > z_{min}$ erreicht. Die Werte $z_o$ und $z_u$ ergeben sich aus

$$f_{max} - f(z_o) = q_D/2, f(z_u) - f_{min} = q_D/2, \quad (9)$$

wobei $q_D$ gegeben ist durch Formel (3). Daraus folgt

$$z_o = f^{-1}(f_{max} - 2^{-b_D-1}), z_u = f^{-1}(f_{min} + 2^{-b_D-1}) \quad (10)$$

Es genügt also, den Wertebereich von z auf das Intervall $z_u, z_o$ zu beschränken. Zahlenwerte $z > z_o$ werden auf $f_{max}$ und Werte $z < z_u$ auf $f_{min}$ abgebildet. Insbesondere für den Fall der Realisierung der nichtlinearen Funktion f mit Hilfe einer Tabelle kann durch diese Maßnahme der Speicheraufwand beträchtlich reduziert werden, da der Adressierbereich gegenüber der vollen Wortlänge drastisch eingeschränkt ist.

Zur Bestimmung der erforderlichen Quantisierungsstufe $q_z$ des Signals z muß die Ungleichung

$$q_z \leq q_D / \max_{z \in (z_u, z_o)} f'(z) \quad (11)$$

eingehalten werden. Hierbei ist f' die Ableitung der Funktion f nach dem Argument z. Die Zahl der erforderlichen Stellen für die Zahl z läßt sich formelmäßig angeben durch

$$b_z = -ld\, q_z - [-ld(\max\{|z_o|, |z_u|\})] + 1, \quad (12)$$

wobei $z_o$ und $z_u$ mit Hilfe von Formel (10) berechnet werden.

In Formel (12) gibt der erste Term die Nachkommastellen und der zweite Term die Stellen vor dem Komma an. Der dritte Term (die 1) steht für das Vorzeichen.

In dem Gleitkommamultiplizierer wird entsprechend Formel (5), der Summenausdruck mit der positiven Gleitkommazahl $\lambda' \, 2^{c+p}$ multipliziert. Zur Vereinfachung wird dieser Summenausdruck mit z' bezeichnet, somit ergibt sich für z'

$$z' = \sum_{j=0}^{m+1} w_j' a \quad (13)$$

Die Zahl z' ist mit $b_A$ Bit im Festkommaformat codiert. Die Wortlänge der Mantisse $\lambda'$ sei $b_\lambda$, wobei für das Vorzeichen keine Stelle vorgesehen werden muß, da $\lambda' > 0$ ist. Das Ergebnis wird mit $b_z$ Bit wieder im Festkommaformat dargestellt. Zur Ausführung dieser Operation können Gleitkommamultiplizierer verwendet werden, wie sie in Figur 3 und 4 dargestellt sind.

Es sind zunächst die Register RG für z' als RGZ, $\lambda'$ als RG $\lambda$, p als RGp und c als RGc gezeigt, die ebenfalls aus Figur 2 entnehmbar sind. Die Zahl z' aus dem Register RGZ wird in einem Festkommamultiplizierer FZ1 mit $\lambda'$ multipliziert. Das Produkt von z' und $\lambda'$ hat dabei die Wortlänge $b_A + b_\lambda$. Die Exponenten p und c der Register RGp und RGc werden in einem Addierer ADD2 addiert und einem Barrel-Shifter BS zugeführt. Durch den Barrel Shifter BS, also einem programmierbaren Schiebewerk, wird das Ergebnis des Festkommamultiplizierers FZ1 entsprechend der Summe c+p in die richtige Position gebracht. Bei einem Linksschiebevorgang muß allerdings sichergestellt werden, daß kein Zahlenbereichsüberlauf stattfindet, d.h. alle beim Schiebevorgang nach links austretenden Bits müssen gleich sein mit dem Vorzeichenbit VZ. Ist dies nicht der Fall, findet also ein Überlauf statt, so muß ein Steuersignal für einen nachfolgenden Sättigungsmultiplexer SM generiert werden.

Durch eine Schneideoperation erfolgt eine Wortlängenverkürzung derart, daß das niederwertigste Bit gerade das Stellengewicht $q_z$ entsprechend (11) hat. Diese Operation wird einfach durch Weglassen der $b_W + b_D + b + ld(q_z) - 1$ niederwertigsten Ausgänge des Barrel Shifters BS erreicht. Der nachfolgende Sättigungsmultiplexer SM beschränkt die resultierende Zahl auf den Wertebereich $z_u, z_o$, so daß die endgültige Wortlänge nur noch $b_z$ Bit entsprechend der Gleichung (12) beträgt. Ist das Überlaufsteuersignal des Barrel Shifters BS gesetzt, so muß der Sättigungsmultiplexer SM ebenfalls in Abhängigkeit des Vorzeichens entweder $Z_u$ oder

$z_o$ ausgeben.

Ein weiteres Ausführungsbeispiel des Gleitkommamultiplizierers GZ kann Figur 4 entnommen werden. Die Zahl z′ wird zunächst in eine Gleitkommazahl umgewandelt und zwar mit Hilfe eines Gleitkommanormalisierers GN. Entsprechend der Darstellung in Figur 6 kann der Akkumulatorinhalt bereits als Mantisse einer Gleitkommazahl mit dem Exponenten $b_M$ aufgefaßt werden, also

$$z' = z_m' \, 2^{b_M - 1} \quad (14)$$

Die Mantisse $Z_m'$ ist hierbei jedoch nicht in normierter Darstellung gegeben. Um nun zu vermeiden, daß die Multiplikation von $z_m'$ mit λ′ in voller wortlänge durchgeführt werden muß, wird zunächst z′ als Gleitkommazahl normiert und auf die notwendige Mantissenwortlänge reduziert. Es folgt dann eine Gleitkommamultiplikation, also eine Multiplikation der Mantissen $z_m'$ mit λ′ im Festkommamultiplizierer FZ2 und eine Addition der Exponenten in den Addierern ADD3 bis ADD5. Das Ergebnis wird direkt danach ohne vorherige Normierung mit Hilfe des Barrel Shifters in eine Festkommazahl umgewandelt und wie zuvor mit einem Sättigungsmultiplexer auf den Zahlenbereich $z_u$ und $z_o$ beschränkt. Zur Verschiebung des Produktes der Mantissen um den Wert der aufsummierten Exponenten wird der Barrel Shifter BS verwendet. BS und SM sind entsprechend Figur 3 ausgeführt. Die Festkommamultiplizierer FZ sind bekannten Aufbaus, dies gilt ebenso für den Gleitkommanormalisierer GN, die Addierer ADD, den Barrel Shifter BS und den Sättigungsmultiplizierer SM.

Ein Schaltungsdetail der Figur 2 kann der Figur 5 entnommen werden. Hier ist gezeigt, wie die Multiplizierer MZ mit Hilfe des Steuersignals S gesteuert werden. An den Ausgang des Multiplizierers MZ sind UND-Glieder UG angeordnet, die durch das Steuersignal S geöffnet oder geschlossen werden können.

## Patentansprüche

1. Anordnung zur Emulation neuronaler Netze unter Verwendung von Multiplizierer (MZ), Addierer (ADD1) und Diskriminatorschaltungen (DE) aufweisenden Neuroneinheiten (NE) mit einer Neuroneinheit (NE) pro Neuron zur Verknüpfung von Eingangssignalen (a, b) mit Gewichten (W); dadurch gekennzeichnet, daß sie umfaßt:
   - Mittel zur Erzeugung einer Gleitkommadarstellung der Gewichte derart, daß der Exponent (c) aller Gewichte (W) pro Neuron gleich ist,
   - Festkommamultiplizierer (MZ) zur Multiplikation der im Festkommaformat anliegenden Eingangssignalen (a,b) mit den Mantissen der Gewichte (W),
   - Festkommaaddierer (ADD, AKK) zur Erzeugung der Summe der von den Festkommamultiplizierern abgegebenen Produkte,
   - einen Gleitkommamultiplizierer (GZ) zur Verknüpfung der Summe mit dem Exponenten der Gewichte,
   - die Diskriminatorschaltung (DE) zur Diskriminierung des Verknüpfungsergebnisses des Gleitkommaaddierers (GZ).

2. Anordnung nach Anspruch 1,
   dadurch **gekennzeichnet,**
   daß der Gleitkommamultiplizierer (GZ) derart ausgeführt ist, daß das Verknüpfungsergebnis im Festkommaformat ist.

3. Anordnung nach Anspruch 1 oder 2,
   dadurch **gekennzeichnet,**
   daß im Gleitkommamultiplizierer (GZ) die Verknüfung der Summe mit einem im Gleitkommaformat dargestellten Skalierungsfaktor (λ) erfolgt.

4. Anordnung nach einem der vorhergehenden Ansprüche,
   dadurch **gekennzeichnet,**
   daß die Verknüpfung der Eingangssignale (a, b) mit den Gewichten (W) durch die Festkommamultiplizierer (MZ) gruppenweise nacheinander erfolgt und die Gruppensummierung der Produkte in einem den Addierern nachgeschalteten Akkumulator (AKK) erfolgt.

5. Anordnung nach einem der vorhergehenden Ansprüche,
   mit einem Gleitkommamultiplizierer (GZ) aus
   - einem Festkommamultiplizierer (FZ1) zur Verknüpfung der vom Akkumulator abgegebenen Summe (z′) mit der Mantisse des Skalierungsfaktors (λ′),

- einem Addierer (ADD2) zur Verknüpfung der Exponenten der Gewichte (c) und des Skalierungsfaktors (p),
- einem Barrel Shifter (BS), an dem das Verknüpfungsergebnis des Festkommamultiplizierers (FZ1) und das Verknüpfungsergebnis des Addierers (ADD2) anliegt, und der das Verknüpfungsergebnis vom Festkommamultiplizierer in Abhängigkeit des Ausgangssignales des Addierers verschiebt und ein Überlaufsignal abgibt,
- einem Sättigungsmultiplexer (SM), an dem der Inhalt des Barrel Shifters (BS) bis auf dessen niederwertigste Stellen und das Überlaufsignal anliegt und der den anliegenden Inhalt des Barrel Shifters auf den zugelassenen Wertebereich beschränkt.

6. Anordnung nach einem der Ansprüche 1 bis 4,
   mit einem Gleitkommamultiplizierer aus
   - einen Gleitkommanormalisierer (GN) zur Normalisierung des Ausgangssignales des Akkumulators (AKK),
   - einem Festkommamultiplizierer (FZ2) zur Verknüpfung des normalisierten Ergebnisses des Akkumulators mit der Mantisse (λ') des Skalierungsfaktors (λ),
   - Addierern (ADD3, ADD4, ADD5) zur Summierung der Exponenten des Skalierungsfaktors, der Gewichte, und des in die Gleitkommazahl umgewandelten Wertes des Ausgangssignales des Akkumulators,
   - einem Barrel Shifter (BS), der das Ausgangssignal des Festkommamultiplizierers entsprechend der Summe der Exponenten verschiebt und ein Überlaufsignal abgibt,
   - einem Sättigungsmultiplexer, an dem der Inhalt des Barrel Shifters und das Überlaufsignal anliegt und der den anliegenden Inhalt des Barrel Shifters auf den zugelassenen Wertebereich beschränkt.

7. Verfahren zur Verknüpfung von an eine Neuroneinheit (NE) eines Emulators eines neuronalen Netzes anliegenden Eingangssignalen (a,b) mit Gewichten (W), durch folgende Schritte gekennzeichnet:
   - die an der Neuroneinheit (NE) anliegenden Eingangssignale (a,b) werden im Festkommaformat dargestellt,
   - die Gewichte werden im Gleitkommaformat derart dargestellt, daß der Exponent für alle Gewichte einer Neuroneinheit (NE) gleich ist,
   - in Festkommamultiplizieren (MZ) der Neuroneinheit werden Produkte der Eingangssignale und der Mantissen der Gewichte erzeugt,
   - die Produkte werden in Addierern (ADD,AKK) aufsummiert,
   - die Summe wird in einem Gleitkommamultiplizierer (GZ) mit den Exponenten der Gewichte verknüpft,
   - das Verknüpfungsergebnis wird in einer Diskriminatorschaltung diskriminiert.

8. Verfahren nach Anspruch 7,
   dadurch **gekennzeichnet**,
   daß im Gleitkommamultiplizierer (GZ) die Summe der Produkte mit einem Skalierungsfaktor verknüpft wird, der im Gleitkommaformat dargestellt ist.

9. Verfahren nach Anspruch 7 oder 8,
   dadurch **gekennzeichnet**,
   daß zu der in den Addierern (ADD, AKK) gebildeten Summe der Produkte ein Schwellwert (θ) hinzuaddiert wird.

## Claims

1. Arrangement for emulating neural networks with the use of neural units (NE) having multipliers (MZ), adders (ADD1) and discriminator circuits (DE), having one neural unit (NE) per neuron for combining input signals (a,b) with weightings (W) characterized in that it comprises
   - means for generating a floating-point representation of the weightings in such a way that the exponent (c) of all the weightings (W) is the same per neuron,
   - fixed-point multipliers (MZ) for multiplying the input signals (a, b), which are present in fixed-point format, by the fixed-point parts of the weightings (W),
   - fixed-point adders (ADD, AKK) for generating the sum of the products output by the fixed-point multipliers,
- a floating-point multiplier (GZ) for combining the sum with the exponents of the weightings, and
- the discriminator circuit (DE) for discriminating the combination result of the floating-point adder (GZ).

2. Arrangement according to Claim 1, characterized in that the floating-point multiplier (GZ) is designed such that the combination result is in fixed-point format.

3. Arrangement according to Claim 1 or 2, characterized in that the combination of the sum is performed in the floating-point multiplier (GZ) with a scaling factor ($\lambda$) represented in floating-point format.

4. Arrangement according to one of the preceding claims, characterized in that the combination of the input signals (a, b) with the weightings (W) is performed sequentially in groups by the fixed-point multipliers (MZ) and the group summation of the products is performed in an accumulator (AKK) downstream of the adders.

5. Arrangement according to one of the preceding claims, having a floating-point multiplier (GZ) comprising
- a fixed-point multiplier (FZ1) for combining the sum (z′) output by the accumulator with the fixed-point part of the scaling factor ($\lambda'$),
- an adder (ADD2) for combining the exponents of the weightings (c) and the scaling factor (p),
- a barrel shifter (BS) at which the combination result of the fixed-point multiplier (FZ1) and the combination result of the adder (ADD2) are present and which shifts the combination result of the fixed-point multiplier as a function of the output signal of the adder and outputs an overflow signal, and
- a saturation multiplexer (SM) at which the content of the barrel shifter (BS) is present up to its least significant positions and the overflow signal, and which restricts the present content of the barrel shifter to the permissible value range.

6. Arrangement according to one of Claims 1 to 4, having a floating-point multiplier, comprising
- a floating-point normalizer (GN) for normalizing the output signal of the accumulator (AKK),
- a fixed-point multiplier (FZ2) for combining the normalized result of the accumulator with the fixed-point part ($\lambda'$) of the scaling factor ($\lambda$),
- adders (ADD3, ADD4, ADD5) for summing the exponents of the scaling factor, the weightings and the value, converted into the floating-point number, of the output signal of the accumulator,
- a barrel shifter (BS), which shifts the output signal of the fixed-point multiplier in accordance with the sum of the exponents and outputs an overflow signal, and
- a saturation multiplexer at which the content of the barrel shifter and the overflow signal are present and which restricts the present content of the barrel shifter to the permissible value range.

7. A process for combining input signals (a, b) present at a neural unit (NE) of an emulator of a neural network with weightings (W), characterized by the following steps:
- the input signals (a, b) present at the neural unit (NE) are represented in fixed-point format,
- the weightings are represented in floating-point format in such a way that the exponent is the same for all weightings of a neural unit (NE),
- the products of the input signals and the fixed-point parts of the weightings are generated in fixed-point multipliers (MZ) of the neural unit,
- the products are summed in adders (ADD, AKK),
- the sum is combined in a floating-point multiplier (GZ) with the exponents of the weightings, and
- the combination result is discriminated in a discriminator circuit.

8. Process according to Claim 7, characterized in that the sum of the products is combined in the floating-point multiplier (GZ) with a scaling factor which is represented in floating-point format.

9. Process according to Claim 7 or 8, characterized in that a threshold value ($\theta$) is added to the sum of the products that is formed in the adders (ADD, ADK).

**Revendications**

1. Dispositif pour l'émulation des réseaux neuronaux moyennant l'utilisation d'unités neuronales (22) comportant des multiplicateurs (MZ), des additionneurs (ADD1) et des circuits discriminateurs (DE), avec une unité neuronale (NE) pour chaque neurone pour la combinaison de signaux d'entrée (a, b) comportant des poids (W), caractérisé par le fait qu'il comporte

- des moyens pour produire une représentation à virgule flottante des poids de sorte que l'exposant (c) de tous les poids (W) est identique pour chaque neurone,
- des multiplicateurs à virgule fixe (MZ) pour multiplier les signaux d'entrée (a, b) présents sous le format à virgule fixe, par les mantisses des poids (W),
- des additionneurs à virgule fixe (ADD, AKK) pour produire la somme des produits délivrés par les multiplicateurs à virgule fixe,
- un multiplicateur à virgule mobile (GZ) pour combiner la somme avec l'exposant des poids,
- le circuit discriminateur (DE) pour discriminer le résultat de la combinaison fournie par l'additionneur à virgule mobile (GZ).

2. Dispositif suivant la revendication 1, caractérisé par le fait que le multiplicateur à virgule mobile (GZ) est agencé de telle sorte que le résultat de la combinaison est présent sous le format à virgule fixe.

3. Dispositif suivant la revendication 1 ou 2, caractérisé par le fait que la combinaison de la somme avec un facteur d'échelle (I) représenté dans le format à virgule mobile est formée dans le multiplicateur à virgule mobile (GZ).

4. Dispositif suivant l'une des revendications précédentes, caractérisé par le fait que la combinaison des signaux d'entrée (a, b) avec les poids (W) s'effectue successivement par groupes au moyen du multiplicateur à virgule fixe (MZ), et la sommation de groupe des produits s'effectue dans un accumulateur (AKK) branché en aval des additionneurs.

5. Dispositif suivant l'une des revendications précédentes, comportant un multiplicateur à virgule mobile (GZ) constitué par

- un multiplicateur à virgule fixe (FZ1) pour combiner la somme (z') délivrée par l'accumulateur, avec la mantisse du facteur d'échelle (I'),
- un additionneur (ADD2) pour combiner les exposants des poids (c) et le facteur d'échelle (p),
- un dispositif de décalage cyclique Barrel Shifter (BS), auquel sont envoyés le résultat de la combinaison fournie par le multiplicateur à virgule fixe (FZE) et le résultat de la combinaison fournie par l'additionneur (ADD2), et qui transfère le résultat de combinaison délivré par le multiplicateur à virgule fixe en fonction du signal de sortie et délivre un signal de dépassement de capacité,

un multiplexeur à saturation (SM), auquel le contenu du dispositif de décalage cycle (BS) est délivré, hormis ses chiffres de poids les plus faibles et le signal de dépassement de capacité, et qui limite le contenu présent dans le dispositif de décalage cyclique, à la gamme admissible de valeurs.

6. Dispositif suivant l'une des revendications 1 à 4, comportant un multiplicateur à virgule flottante constitué par

- un dispositif de normalisation à virgule flottante (GM) pour normaliser le signal de sortie de l'accumulateur (AKK),
- un multiplicateur à virgule fixe (FZ2) pour combiner le résultat normalisé de l'accumulateur à la mantisse (I') du facteur d'échelle (I),
- des additionneurs (ADD3, ADD4, ADD5) pour additionner les exposants du facteur d'échelle, les poids et la valeur, convertie en le nombre à virgule flottante, du signal de sortie de l'accumulateur,
- un dispositif de décalage cyclique (BS), qui décale le signal de sortie du multiplicateur à virgule fixe en fonction de la somme des exposants et délivre un signal de dépassement de capacité,
- un multiplexeur à saturation auquel sont envoyés le contenu du dispositif de décalage cyclique et le signal de dépassement de capacité et qui limite le contenu présent du dispositif à décalage cyclique à la plage admissible de valeurs.

7. Procédé pour combiner les signaux d'entrée (a, b) envoyés à une unité neuronale (NE) d'un émulateur d'un réseau neuronal, à des poids (W), caractérisé par le fait que

- les signaux d'entrée (a, b) envoyés à l'unité neuronale (NE), sont représentés sous le format à virgule fixe,
- les poids sont représentés sous le format à virgule flottante de telle sorte que l'exposant est le même pour tous les poids de l'unité neuronale (NE),
- les produits des signaux d'entrée et des mantisses des poids sont produits dans des multiplicateurs à virgule fixe (MZ) de l'unité neuronale,
- les produits sont additionnés dans des additionneurs (ADD, AKK),
- la somme est combinée, dans un multiplicateur à virgule flottante (GZ), aux exposants des poids,
- le résultat de la combinaison est discriminé dans un circuit discriminateur.

8. Procédé suivant la revendication 7, caractérisé par le fait que dans le multiplicateur à virgule flottante (FZ), la somme des produits est combinée à un facteur d'échelle, qui est représenté dans le format à virgule flottante.

9. Procédé suivant la revendication 7 ou 8, caractérisé par le fait qu'une valeur de seuil (q) est ajoutée à la somme des produits, qui est formée dans les additionneurs (ADD, AKK).

# FIG 1

# FIG 3

FIG 2

FIG 5

FIG 4

FIG 6